# EUROPEAN PATENT SPECIFICATION

(11) **EP 1 674 227 B1**
(45) Date of publication and mention of the grant of the patent: **08.09.2010**
(21) Application number: 05077713.5
(22) Date of filing: 01.12.2005
(51) Int. Cl.: B28B 3/12, B28B 3/00, B30B 5/06

(54) **Device for producing ceramic sheets**
Vorrichtung zum Herstellung von keramischen Folien
Dispositif de production de feuilles céramiques

(30) Priority: 22.12.2004 IT RE20040153
(43) Date of publication of application: 28.06.2006
(73) Proprietor: SACMI Cooperativa Meccanici Imola Società Cooperativa, 40026 Imola (Bologna) (IT)
(72) Inventor: Cocquio, Alessandro, Sacmi Cooperativa Meccanici, 40026 Imola (Bologna) (IT); Valli, Silvano, Sacmi Cooperativa Meccanici, 40026 Imola (Bologna) (IT); Babini, Alan, Sacmi Cooperativa Meccanici, 40026 Imola (Bologna) (IT)
(74) Representative: Corradini, Corrado

(56) References cited:
- EP-A- 1 356 909
- WO-A-00/67996
- DE-C1- 4 211 792
- US-A1- 2004 250 707

## Description

The present invention refers to a device for producing ceramic sheets and in particular a device for forming the aforementioned sheets.

As is known, the production of ceramic sheets beginning from ceramic powders is generally realised by means of a device comprising a couple of compactor belts, respectively lower and upper belts, cooperating in order to dry compact a strip of ceramic powders which is sent forward, by means of a conveyor belt interposed between them, in an advancing direction parallel to the lower belt.

Each belt is generally wound around a couple of rollers, of which one is motorised.

During the forming, the strip of ceramic powders first crosses a reception zone where a first light pressure is applied and the outflow of air possibly trapped in the powders occurs, then a compaction zone where the actual pressing of the powders occurs to form a suitable manufactured item, and finally an expansion zone downstream from the compaction zone which permits avoiding the undesired formation of cracks and/or fissures.

Subsequently, the ceramic sheet is trimmed at the edges and subdivided into blocks for the realisation of tiles, which are usually subjected to surface decoration.

One such device is described in detail in the European patent application EP-A-1356909 by the same applicant, whose text is recommended for complete information.

In the devices of known art, the compactor belts are covered by a layer of plastic material in order to guarantee that the powder strip does not dirty the belts themselves during the compaction.

The flexibility of such belts guarantees a high adaptability to the movement of the powders during the expansion step downstream from the compaction and furthermore permits using rollers with low diameters, permitting the construction of devices of limited size.

Unfortunately, the compacted product obtained by such devices may not be superficially decorated by low-thickness applicators, such as for example wet glazers.

This is due to an undesired surface roughness.

Therefore, sheets are realised with such known art devices may not be decorated with any technical treatment without a considerable deterioration of the final result.

Consequently, the use of such known art devices is limited to the sheets to be treated with a restricted number of decorative techniques.

Object of the present invention is to provide a device for producing ceramic sheets adapted to be decorated with any decorative process, without any technological limitation.

Such object is achieved by means of a device in accordance with claim 1.

The dependent claims outline preferred and particularly advantageous embodiments of the device according to the invention.

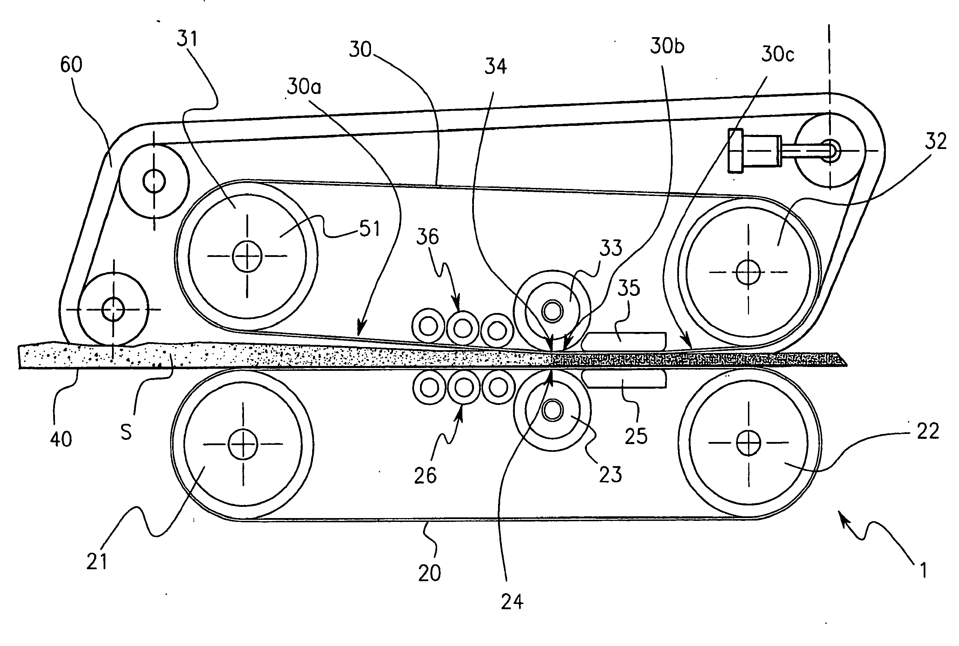

Further characteristics and advantages of the invention shall be evident from the reading of the following exemplifying and not limiting description, with the aid of the figure illustrated in the attached table which shows a schematic view of a device for producing ceramic sheets having a surface with limited roughness, in accordance with the present invention.

With reference to the aforementioned figure, a device for producing ceramic sheets is entirely indicated with 1, in accordance with the present invention.

The device 1 comprises a conveyor belt 40 on which a continuous strip "S" is formed of ceramic powder material, a first lower compactor belt 20 placed below and in contact with the conveyor belt 40 and a second upper compactor belt 30 cooperating with the first belt 20 in order to dry compact the powder strip S and to obtain a manufactured item of compacted powders.

The upper belt 30 has a first reception portion 30a having an slope, generally 1°÷2°, with respect to the advancing direction of the powder strip S and placed to the left in the figure, a second forming portion 30b placed in the centre, and a third expansion portion 30c to the right in the figure.

The side containment of the powders is assigned, as is customary, to two deformable side walls, for display simplicity not illustrated.

In the example, the couple of rollers is formed by a motor roller, indicated respectively with 32 for the upper belt 30 and with 22 for the lower belt 20, and an idle roller, indicated respectively with 31 for the upper belt 30 and with 21 for the lower belt 20, respectively placed at the winding ends of the corresponding belts.

In order to effectively carry out a compaction action, the lower belt 20 and the upper belt 30 are each equipped with a compaction roller, indicated with 33 for the upper belt 30 and 23 for the lower belt 20 and situated in the central area of the belts 20,30.

The two compactor rollers 33 and 23 act directly on the belts 30,20 at the two tangent points, respectively indicated with 34 and 24 for the upper 30 and lower 20 belt.

Essentially, the distance between the two tangent points 34 and 24 is equal, subtracting the thicknesses of the belts 20,30, to the minimum opening through which the powder strip S is forced to pass.

In order to execute a correct compaction, the respective axes of the compactor rollers 33,23 lie on a common plane, perpendicular to the advancing direction of the powder strip S.

If the two compactor wheels 33,23 are found to be offset, appropriate alignment means, not illustrated, permit a mutual movement of the compactor rollers 33,23 in order to restore the correct position.

To vary the desired thickness of the final sheet, the distance between the two belts 20,30 must be altered, as well as by consequence the distance between the compactor rollers 33 and 23.

This may be carried out by movement means, known in the field and therefore not illustrated here, adapted to perpendicularly move the belts 20,30 and the compactor rollers 33,23 closer together or further away from each other with respect to the advancing direction of the powders.

As may be seen in the figure, between the couples of rollers 31,32 and 21,22, two roller conveyors formed by a plurality of idle rollers are placed which act on the respective belts 30,20; the roller conveyors are upstream from the two compactor rollers 33,23 and have the function of keeping the belts 30 and 20 pressed so that they press the powder strip S.

Naturally, the roller conveyor 36 which acts on the sloped reception portion 30a of the upper belt 30 has an equal slope, so to make the compaction of the powder strip S gradual.

Downstream of the compactor rollers 33,23, two opposing plates 35 and 25 are present such that the first 35 acts on the expansion portion 30c of the upper belt 30 and the second on the lower belt 20 in order to limit the expansion of the powder strip S.

In accordance with the present invention, at least one of the two belts 20,30 comprises a layer realised in steel, in contact with the powder strip S to be compacted.

In order to obtain a sheet having a surface with a very low roughness, the steel layer has a surface roughness "Ra" less than 0.5 µm and a hardness greater than 300 HV.

Where Ra indicates the arithmetic mean of the roughness measurements carried out and HV indicates the dimensionless hardness value obtained by executing a Vickers test.

The realisation of steel belts with low roughness may be carried out by means of machine tools known in the field and therefore not described here which are capable of grinding the belt up to values less than 0.1 µm Ra.

In particular and according to the preferred embodiment of the present invention, the steel layer entirely substitutes the traditional upper belt 30 covered in plastic material.

The steel type utilised must be sufficiently flexible to be wound around the rollers 31,32, while at the same time sufficiently rigid in order to withstand the pressure generated by the compacting powders.

In order to avoid surface corrosion, belts realised in stainless steel are preferable, since the strip of ceramic powders is characterised by a not insignificant water content.

Furthermore, it is preferable that the belt has a high mechanical strength "Rm", for example greater than 700 Mpa, since the winding on the motor roller 32 entails a high fatigue stress.

Finally, it has been seen how the choice of a thickness comprised between 0.5 and 2 mm for the belt 30 permits avoiding the adoption of overly large and thus costly rollers 31,32, without compromising the durability of the belt itself.

It is preferable to use a ratio between the roller diameter and the thickness of the steel belt comprised between 400 and 900.

As may be appreciated from that described, the ceramic powder belt compaction device for the forming of sheets according to the present invention permits satisfying the needs and overcoming the drawbacks as mentioned in the introductive part of the present description with reference to the known art.

Indeed, said device permits obtaining sheets with surfaces of low roughness, thus adapted to be subsequently treated with decoration techniques in order to obtain lucid enamelled products with very sharp graphics.

Of course, regarding the ceramic powder belt compaction device for the forming of sheets described above, one skilled in the art, with the object of satisfying contingent and specific needs, may produce numerous modifications and variants, all moreover contained in the protective scope of the invention as defined by the following claims.

## Claims

1. Device (1) intended for producing ceramic sheets comprising:
- a conveyor belt (40) on which a continuous strip (S) is formed of ceramic powder material;
- a first lower compactor movable belt (20) placed in contact with the conveyor belt (40) and below it;
- a second upper compactor movable belt (30) cooperating with said first belt (20) in order to continuously compact the powder strip (S), **characterised in that** at least one of said belts comprises a layer, in contact with the powder strip (S) to be compacted, realised in steel and having a surface roughness (Ra) in contact with said ceramic powder strip (S) of less than 0.5 µm and said steel layer has a surface hardness greater than 330 HV.

2. Device (1) according to claim 1, in which said steel layer has a mechanical strength (Rm) greater than 700 Mpa.

3. Device (1) according to claim 1, in which said layer is in stainless steel.

4. Device (1) according to claim 1, in which said upper belt (30) is entirely realised in steel.

5. Device (1) according to claim 4, in which said upper belt (30) has a thickness comprised between 0.5 mm and 2 mm.

## Patentansprüche

1. Vorrichtung (1) für die Herstellung von Keramikfolien, einschließlich:
- eines Förderbandes (40), auf dem eine durchgehende Schicht (S) aus Keramikpulver gebildet wird;
- eines ersten unteren beweglichen Verdichterbandes (20), das mit dem Förderband (40) in Berührung steht und sich unter ihm befindet;
- eines zweiten oberen beweglichen Verdichterbandes (30), das mit dem ersten Band (20) zusammenwirkt, um die Pulverschicht (S) fortlaufend zu pressen, **dadurch gekennzeichnet, dass** wenigstens eines der Bänder eine Stahlschicht beinhaltet, die mit der zu pressenden Pulverschicht (S) in Berührung steht und die eine Oberflächenrauheit (Ra) in Berührung mit der Pulverschicht (S) von weniger als 0,5 µm und eine Oberflächenhärte von mehr als 300 HV aufweist.

2. Vorrichtung (1) nach Patentanspruch 1, wobei die Stahlschicht eine mechanische Festigkeit (Rm) von mehr als 700 MPa aufweist.

3. Vorrichtung (1) nach Patentanspruch 1, wobei die Schicht aus Edelstahl besteht.

4. Vorrichtung (1) nach Patentanspruch 1, wobei das obere Band (30) vollständig aus Stahl besteht.

5. Vorrichtung (1) nach Patentanspruch 4, wobei das obere Band (30) eine Dicke zwischen 0,5 mm und 2 mm aufweist.

## Revendications

1. Dispositif (1) prévu pour la production de feuilles en céramique comprenant :
- un tapis de transport (40) sur lequel est formée une bande continue (S) de matériau en poudre de céramique ;
- un premier tapis mobile compacteur inférieur (20) placé en contact avec le tapis de transport (40) et au-dessous de celui-ci ;
- un deuxième tapis mobile compacteur supérieur (30) coopérant avec ledit premier tapis (20) afin de compacter de manière continue la bande de poudre (S), **caractérisé par le fait qu'**au moins un desdits tapis comprend une couche, en contact avec la bande de poudre (S) à compacter, réalisée en acier et ayant une rugosité superficielle (Ra) en contact avec ladite bande de poudre de céramique (S) inférieure à 0,5 µm et que ladite couche d'acier possède une dureté superficielle supérieure à 300 HV.

2. Dispositif (1) selon la revendication 1, où ladite couche d'acier possède une résistance mécanique (Rm) supérieure à 700 Mpa.

3. Dispositif (1) selon la revendication 1, où ladite couche est en acier inoxydable.

4. Dispositif (1) selon la revendication 1, où ledit tapis supérieur (30) est entièrement réalisé en acier.

5. Dispositif (1) selon la revendication 4, où ledit tapis supérieur (30) possède une épaisseur comprise entre 0,5 mm et 2 mm.
